# EUROPEAN PATENT SPECIFICATION

(11) **EP 3 997 052 B1**
(45) Date of publication and mention of the grant of the patent: **18.12.2024**
(21) Application number: 20740087.0
(22) Date of filing: 06.07.2020
(51) Int. Cl.: C05B 11/08, C05B 17/00, C05C 9/00

(54) **UREA PHOSPHATE CALCIUM SULFATE GRANULES AND METHODS FOR PRODUCING AND USING THE SAME**
HARNSTOFFPHOSPHATCALCIUMSULFATGRANULAT UND VERFAHREN ZU SEINER HERSTELLUNG UND VERWENDUNG
GRANULÉS DE PHOSPHATE D'URÉE ET DE SULFATE DE CALCIUM ET PROCÉDÉS POUR LA PRODUCTION ET L'UTILISATION DE CEUX-CI

(30) Priority: 12.07.2019 US 201962873521 P
(43) Date of publication of application: 18.05.2022
(73) Proprietor: Sabic Agri-Nutrients Company, 31961 Jubail Industrial City (SA)
(72) Inventor: BAG, Nilkamal, Bangalore 562125 (IN); SHARMA, Yogesh Omprakash, Bangalore 562125 (IN); AL-ROHILY, Khalid, Riyadh, 11422 (SA); KELLS, Andrew George, Wilton TS104RF (GB)
(74) Representative: Balder IP Law, S.L.
(86) International application number: PCT/IB2020/056346
(87) International publication number: WO 2021/009611

(56) References cited:
- EP-A1- 3 210 959
- WO-A1-2019/016763
- WO-A1-2020/115698
- GB-A- 1 211 537
- US-A1- 2020 148 607

## Description

### BACKGROUND OF THE INVENTION

### A. Field of the Invention

The invention generally concerns a urea phosphate calcium sulfate (UPCS) fertilizer granule that includes urea phosphate and a urea-calcium sulfate (UCS) adduct. The granule includes 22 wt.% to 28 wt.% nitrogen (22 wt.% to 28 wt.% N), an amount of phosphorus equal to that provided by 5 wt.% to 10 wt.% P₂O₅ (5 wt.% to 10 wt.% P), 2 wt.% to 8 wt.% sulfur (2 wt.% to 8 wt.% S), and 5 wt.% to 11 wt.% calcium (5 wt.% to 11 wt.% Ca).

### B. Description of Related Art

Soil nutrients, such as nitrogen, phosphorus, potassium, and sulfur, as well as trace elements such as iron, zinc, copper, and magnesium, are useful for achieving thriving agriculture and growth of plants. Upon repeated planting cycles, the quantity of these nutrients in the soil may be depleted, resulting in inhibited plant growth and decreased production. To counter this effect, fertilizers have been developed to help replace the depleted vital nutrients. Single-nutrient fertilizers and multi-nutrient fertilizers, such as fertilizer blends, have been developed to meet the varied needs of crop production worldwide.

Fertilizers containing nitrogen are used to support healthy plant growth and photosynthesis. Urea (CH₄N₂O) is a compound that contains nitrogen and is widely used as a nitrogen source in fertilizers. However, due to its rapid hydrolysis and nitrification in the soil, nitrogen from urea can be quickly lost. Also, using urea in fertilizer blends that contain other soil nutrients is difficult, as urea can undesirably react with other components in the fertilizer, such as organic fertilizers. These reactions can produce water that liquefies solid granules or dry mixture products, cause clumping and loss of product, and increase the rate at which these undesirable reactions take place. *See* Biskupski et al. (EP 2,774,907); *see also* Achard et al. (US 5,409,516). Further, the production of water increases the amount of water that has to be removed during production of urea containing fertilizers, making these blended fertilizers difficult and more expensive to make. *See* Schwob (FR 2,684,372).

Some of the problems with using urea in fertilizers have been reduced or overcome by binding urea to calcium sulfate as a calcium sulfate urea adduct (UCS) or reacting urea with rock phosphate and sulfuric acid to form urea associated with superphosphate (monocalcium phosphate; Ca(H₂PO₄)₂) and/or dicalcium phosphate (CaHPO₄) (*see* WO 01/42172, CN 108530175, EP2774907, US5409516, CN103086781). These reactions often form or contain gypsum as an unwanted byproduct that is removed before the final fertilizer product is made. Removal and storage of gypsum can be expensive and consume large amounts of water. Some have attempted to use gypsum in urea containing fertilizers, *see* CN101519324, but gypsum is often viewed as an undesirable waste product in fertilizers. By way of illustration, GB1211537 discloses a process for producing a fertilizer comprising reacting monocalcium phosphate, urea sulfate and urea. However, in that process, gypsum is formed as by-product and has to be removed, e.g., by filtration. EP3210959 discloses a solid particulate urea-based composition comprising urea-calcium sulphate and urea superphosphate and mixtures thereof, but fails to specifically disclose any urea phosphate calcium sulphate (UPCS) fertilizer granule, let alone any UPCS fertilizer granule comprising urea phosphate and a urea-calcium sulfate (UCS) adduct with any specific quantitative composition thereof. On the other hand, WO2019/016763, US2020/148607 and WO2020/115698 specifically calcium sulfate urea (UCS) fertilizer granules, but fail to disclose an adduct with urea phosphate, let alone any UPCS fertilizer granule comprising urea phosphate and a urea-calcium sulfate (UCS) adduct with any specific quantitative composition thereof.

### SUMMARY OF THE INVENTION

A discovery has been made that addresses at least some of the problems associated with urea based fertilizers and calcium sulfate urea (UCS) adduct based fertilizers. The discovery is premised on producing a fertilizer containing a UCS adduct (4NH₂CONH₂· CaSO₄) and urea phosphate (NH₂CONH₂·H₃PO₄), combined referred to here as urea phosphate calcium sulfate (UPCS), that consumes gypsum (calcium sulfate dihydrate) during the production process. This eliminates the need to remove gypsum before, during, or after formation of the UPCS fertilizer or UPCS fertilizer granules. In some instances, the product produced contains less gypsum, monocalcium phosphate, dicalcium phosphate, and/or urea superphosphate than other fertilizer products that bind urea into a more stable compound. In some instances, the product contains no gypsum, monocalcium phosphate, dicalcium phosphate, and/or urea superphosphate. Not to be bound by theory, it is believed that gypsum produced or used in the method of production is consumed before production of the final product in part due to the use of sulfuric acid in stoichiometric excess. The sulfuric acid is used in excess when producing a phosphoric acid slurry that is then combined with urea to produce the UPCS fertilizer. This process is beneficial in reducing or eliminating the need, equipment, storage, water, and energy for removing gypsum. Further, the production of the phosphoric acid slurry is exothermic, which can produce enough heat to drive the production of the UCS adduct and urea phosphate when urea is added. This reduces or eliminates the need for an external heat source and the energy and equipment associated therewith. The final UPCS product produced can be used as a high nitrogen content fertilizer. For example, the UPCS of the present invention can contain 22 wt.% to 28 wt.% nitrogen (22 wt.% to 28 wt.% N), an amount of phosphorus equal to that provided by 5 wt.% to 10 wt.% P₂O₅ (5 wt.% to 10 wt.% P), 2 wt.% to 8 wt.% sulfur (2 wt.% to 8 wt.% S), and 5 wt.% to 11 wt.% calcium (5 wt.% to 11 wt.% Ca). In some preferred instances, the UPCS granule can contain 25 wt.% N, 8.5 wt.% P, 5.5 wt.% S, and 8 wt.% Ca (NPKSCa: 25-8.5-0-5.5-8). The fertilizer compositions can be beneficial where higher concentrations of nitrogen are desired.

In one aspect of the invention, UPCS fertilizer granules according to claim 1 are described. The UPCS fertilizer granule includes urea phosphate and a urea-calcium sulfate (UCS) adduct. The UCS adduct can be CaSO₄·4CO(NH₂)₂. In some instances, the granule does not contain monocalcium phosphate, dicalcium phosphate, gypsum, and/or urea superphosphate. The UPCS fertilizer granule can include a weight ratio of UCS adduct to urea phosphate of 2:1 to 9:1. The weight ratio can be 2:1, 3:1, 4:1, 5:1, 6:1, 7:1, 8:1, or 9:1, or any ratio there between. In some instances, the weight ratio is 2:1 to 8:1, 2:1 to 7:1, 2:1 to 6:1, 2:1 to 5:1, 3:1 to 8:1, 3:1 to 7:1, 3:1 to 6:1, or 3:1 to 5:1, or any range or ratio therein. In some instances, the weight ratio is 4:1 UCS adduct to urea phosphate.

The UPCS fertilizer granule includes 22 wt.% to 28 wt.% N, 5 wt.% to 10 wt.% P, 2 wt.% to 8 wt.% S, and 5 wt.% to 11 wt.% Ca. In some instance, the UPCS fertilizer granule can include 23 wt.% to 27 wt.% N, 7 wt.% to 10 wt.% P, 3 wt.% to 7 wt.% S, and 6 wt.% to 10 wt.% Ca. In another instance the UPCS fertilizer granule can include 24 wt.% to 26 wt.% N, 7.5 wt.% to 9.5 wt.% P, 4.5 wt.% to 6.5 wt.% S, and 7 wt.% to 9 wt.% Ca. In one instance, the UPCS fertilizer granule can include 25 wt.% N, 8.5 wt.% P, 5.5 wt.% S, and 8 wt.% Ca. The free-moisture content of the UPCS fertilizer granule can be less than 1 wt.%, preferably less than 0.8 wt.%, less than 0.5 wt.% water or 0.25 wt.% to 0.7 wt.% water. In some instances, the UPCS fertilizer granule does not include potassium. In some instances, the granule can have a density greater than water (e.g., greater than 1.0 g/mL). The UPCS fertilizer granule can be comprised of one or more particles. Also, the UPCS fertilizer granules of the present invention can have an average particle size of 1 millimeter (mm) to 5 mm, preferable about 2 mm to 4 mm.

The UPCS fertilizer granules of the present invention can also contain one or more additives. The additive can be a fertilizer, a micronutrient, a secondary nutrient, or an organic additive. The additive can be a fertilizer, compound, or composition that provides a nitrogen based fertilizer, a phosphate-based fertilizer, a potassium-based fertilizer, a urea-based fertilizer, a fertilizer providing nitrogen-phosphorus-potassium (NPK), diammonium phosphate (DAP), monoammonium phosphate (MAP), single superphosphate (SSP), triple superphosphate (TSP), urea, potassium chloride, potassium sulfate, magnesium sulfate, superphosphates, rock phosphate, potash, sulfate of potash (SOP), muriate of potash (MOP), kieserite, carnallite, magnesite, dolomite, boric acid, boron (B), copper (Cu), iron (Fe), manganese (Mn), molybdenum (Mo), zinc (Zn), selenium (Se), silicon (Si), free Ca, magnesium (Mg), elemental sulfur (S), neem oil, seaweed extract, bio-stimulants, char, ashes from incineration of animal waste or animal tissues, or any combination thereof.

In yet another aspect of the invention, processes to produce the UPCS fertilizer granules containing urea-calcium sulfate (UCS) adduct and a urea phosphate of the present invention are described according to claim 8. A process can include (a) combining urea, phosphoric acid, and calcium sulfate dihydrate (gypsum) under conditions sufficient to form a product comprising a urea-calcium sulfate (UCS) adduct and a urea phosphate and (b) removing at least a portion of the water from the product to form the UPCS fertilizer granule. In some instances, the formation of the urea-calcium sulfate (UCS) adduct and a urea phosphate consumes all or substantially all of and/or does not produce monocalcium phosphate, dicalcium phosphate, gypsum, and/or urea superphosphate. In some instances, the UPCS fertilizer granule produced does not contain monocalcium phosphate, dicalcium phosphate, gypsum, and/or urea superphosphate.

The phosphoric acid and gypsum that is combined with urea is combined as a phosphoric acid slurry. In some instances, step (a) can include obtaining the phosphoric acid slurry before contacting with urea, by contacting rock phosphate with an excess of sulfuric acid in excess of the stoichiometric amount of sulfuric acid required to form all the reactable phosphorous into phosphoric acid (e.g., more than 3 moles sulfuric acid for every 2 moles of phosphorous in the rock phosphate). The sulfuric acid used to contact the rock phosphate can be in 1%, 2%, 3%, 4%, 5%, 10%, 15%, 20%, 30%, 40%, 50%, 60%, 70%, 80%, 90%, or 100% or greater stoichiometric excess, or any percent there between or range thereof. In some instances, the sulfuric acid is in at least 2 %, at least 3 %, 2 % to 50%, 2% to 10%, 2% to 5%, or 2 % to 3%, stoichiometric excess or any range or percent thereof. In some instances, the phosphoric acid slurry contains sulfuric acid. The sulfuric acid used can be a concentrated sulfuric acid, such as 90 wt.%, 95 wt.%, or 98 wt.% or greater sulfuric acid or any concentration there between. In some instances, step (a) includes combining urea, phosphoric acid, sulfuric acid, and calcium sulfate dihydrate under conditions sufficient to form a product comprising a urea-calcium sulfate (UCS) adduct and a urea phosphate. The reaction producing the UPCS can be performed at a temperature of or greater than 65 °C, 70 °C, 75 °C, or 80 °C, or any temperature there between. In some instances, the temperature is 65 °C to 95 °C, 70 °C to 95 °C, 70 °C to 90 °C, 65 °C to 90 °C, or 75 °C to 85 °C, or any combination of these ranges or ranges there between. The temperature can be reached by the exothermic reaction of contacting rock phosphate with sulfuric acid in excess of the stoichiometric amount required of sulfuric acid to convert all of the potentially reactive phosphorous into phosphoric acid. In the method according to claim 8, the composition comprising phosphoric acid and gypsum is a phosphoric acid slurry obtained by contacting rock phosphate with sulfuric acid in excess of the stoichiometric amount required of sulfuric acid to form phosphoric acid and gypsum, in particular sulfuric acid having a concentration of at least 90 wt.% sulfuric acid, wherein the rock phosphate and sulfuric acid may cause an exothermic reaction sufficient to increase the temperature of the phosphoric acid slurry to at least 65 °C. In some instances, gypsum is not filtered or removed at or between the step of contacting urea with a composition comprising phosphoric acid and gypsum and the step of removing at least a portion of water from the product to form the UPCS fertilizer granule.

An advantage of the processes to produce the UPCS fertilizer granules disclosed herein includes the ability to produce a reaction product that contains urea-calcium sulfate (UCS) adduct and a urea phosphate without monocalcium phosphate, dicalcium phosphate, gypsum, and/or urea superphosphate being present in the final product. In some embodiments there is no need to, and the process to form the UPCS fertilizer granule excludes, filtering out or removing gypsum once the urea is contacted with the phosphoric acid and gypsum. Another advantage of the processes to produce the UPCS fertilizer granules disclosed herein includes the ability, in some instances, to produce a reaction product without requiring external heating of the reactants due to the exothermic reaction of rock phosphate with sulfuric acid to form the phosphoric acid slurry.

In another aspect of the present invention, methods of fertilizing are described. A method can include applying a plurality of UPCS fertilizer granules of the present invention to a portion of a soil, a crop, or a combination of the soil and the crop. In some embodiments, the soil is at least partially or fully submerged under water (e.g., rice paddy crops) and the granules sink in the water to contact the soil. This can allow for homogenous distribution of the granules to the soil rather than having the granules coalesce together in or on the surface of the water.

Also disclosed in the context of the present invention are blended or compounded fertilizer compositions that include a plurality of UPCS fertilizer granules of the present invention mixed with other fertilizers, micronutrients, secondary nutrients, or organic additives. In particular, a fertilizer comprising a UPCS fertilizer granule according to claim 1 is disclosed, wherein the fertilizer may be a fertilizer blend or a compounded fertilizer comprising at least one additional component. The fertilizers can be particulate in form (e.g., urea, monoammonium phosphate (MAP), diammonium phosphate (DAP), muriate of potash (MOP), and/or sulfate of potash (SOP)). Preferably, the UPCS granules and additional fertilizers are compatible with each other (e.g., can contact each other without having a chemical reaction take place). The blended or compounded fertilizer can contain in addition to the UPCS fertilizer granules, a nitrogen based fertilizer, a phosphate-based fertilizer, a potassium-based fertilizer, a urea-based fertilizer, a fertilizer providing nitrogen, phosphorus, and potassium (NPK), diammonium phosphate (DAP), monoammonium phosphate (MAP), single superphosphate (SSP), triple superphosphate (TSP), urea, potassium chloride, potassium sulfate, magnesium sulfate, superphosphates, rock phosphate, potash, sulfate of potash (SOP), muriate of potash (MOP), kieserite, carnallite, magnesite, dolomite, boric acid, B, Cu, Fe, Mn, Mo, Zn, Se, Si, Ca, Mg, S, neem oil, seaweed extract, bio-stimulants, char, ashes from incineration of animal waste or animal tissues, etc., or any combination thereof.

The following includes definitions of various terms and phrases used throughout this specification.

The term "fertilizer" is defined as a material applied to soils or to plant tissues to supply one or more plant nutrients essential or beneficial to the growth of plants and/or stimulants or enhancers to increase or enhance plant growth. Non-limiting examples of fertilizers include materials having one or more of urea, ammonium nitrate, calcium ammonium nitrate, one or more superphosphates, binary NP fertilizers, binary NK fertilizers, binary PK fertilizers, NPK fertilizers, molybdenum, zinc, copper, boron, cobalt, and/or iron. In some aspects, fertilizers include agents that enhance plant growth and/or enhance the ability for a plant to receive the benefit of a fertilizer, such as, but not limited to biostimulants, urease inhibitors, and nitrification inhibitors. In some particular instances, the fertilizer is urea.

The term "micronutrient" is defined as a chemical element or substance required in trace amounts for the normal growth and development of a plant. Non-limiting examples of micronutrients include B, Cu, Fe, Mn, Mo, Zn, Se, and Si or compounds thereof.

The term "secondary nutrient" is defined as a chemical element or substance required in moderate amounts for plant growth and are less likely to limit crop growth in comparison to N, P, and K. Non-limiting examples of secondary nutrients include Ca, Mg, and S.

The term "organic agent" is defined as a substance that is produced by or part of an organism. Non-limiting examples of organic agents suitable for a fertilizer include neem oil, seaweed extract, bio-stimulants, char, ashes from incineration of animal waste or animal tissues, and diatomaceous earth.

The term "granule" can include a solid material. A granule can have a variety of different shapes, non-limiting examples of which include a spherical, a puck, an oval, a rod, an oblong, or a random shape.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%", "vol.%", or "mol.%" refers to a weight percentage of a component, a volume percentage of a component, or molar percentage of a component, respectively, based on the total weight, the total volume of material, or total moles, that includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include"), or "containing" (and any form of containing, such as "contains" and "contain") are inclusive or open-ended and do not exclude additional, unrecited elements or method steps.

The UPCS fertilizer granules of the present invention can "comprise," "consist essentially of," or "consist of" particular ingredients, components, compositions, etc. disclosed throughout the specification. With respect to the transitional phase "consisting essentially of," in one non-limiting aspect, a basic and novel characteristic of the UPCS fertilizer granules of the present invention is the presence of a urea phosphate and a urea-calcium sulfate (UCS) adduct in the UPCS granule, the UPCS granule containing 22 wt.% to 28 wt.% N, 5 wt.% to 10 wt.% P, 2 wt.% to 8 wt.% S, and 5 wt.% to 11 wt.% Ca. Further, the stable UPCS fertilizer granules can in some instances contain no gypsum, monocalcium phosphate, dicalcium phosphate, and/or urea superphosphate and/or can be produced a phosphoric acid slurry produced using sulfuric acid in stoichiometric excess.

### BRIEF DESCRIPTION OF THE DRAWINGS

Advantages of the present invention may become apparent to those skilled in the art with the benefit of the following detailed description and upon reference to the accompanying drawings.

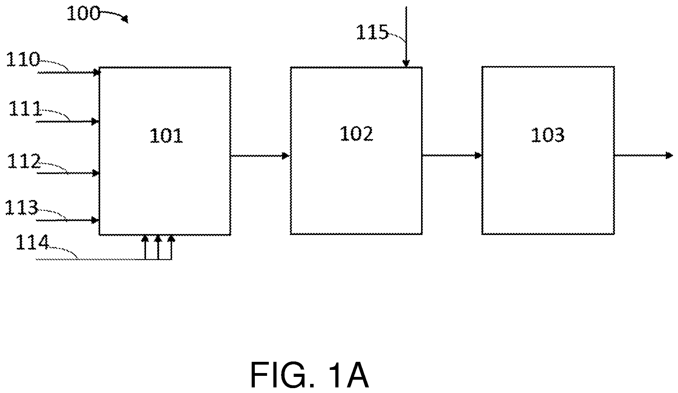

**FIGS. 1A** - **1C** **are: 1A** a schematic of a system that can be used to produce UPCS fertilizer granules of the present invention in which urea, phosphoric acid, and gypsum can be used as starting materials; **1B** a schematic of a system that can be used where a phosphate slurry containing sulfuric acid can be used as a starting material; and **1C** a schematic of a system that can be used where rock phosphate and excess sulfuric acid can be used as starting materials.

While the invention is susceptible to various modifications and alternative forms, specific embodiments thereof are shown by way of example in the drawings. The drawings may not be to scale.

### DETAILED DESCRIPTION OF THE INVENTION

A fertilizer containing a UCS adduct and urea phosphate, combined referred to here as UPCS, is disclosed herein. The UPCS fertilizer can be produced without the need to remove gypsum once urea is combined in the production reaction. In some instances, the product produced contains less gypsum than other UCS adduct producing reactions. In some instances, the product contains no gypsum, monocalcium phosphate, dicalcium phosphate, and/or urea superphosphate. Not to be bound by theory, it is believed that gypsum produced or present in the method of UPCS production is consumed before production of the final UPCS product. This may occur in part due to the use of sulfuric acid in stoichiometric excess when producing a phosphoric acid slurry (e.g., greater than 3 moles of sulfuric acid for every 2 moles of phosphorous in a rock phosphate staring material). This is beneficial in reducing or eliminating the undesired gypsum waist product, reducing or eliminating the equipment, water, storage, and energy needed to remove gypsum. Further, the production of the phosphoric acid slurry is exothermic, which can produce enough heat to drive the production of UPCS. The final product produced can be used as a high nitrogen content fertilizer. For example, UPCS granules of the present invention can include 22 wt.% to 28 wt.% nitrogen (22 wt.% to 28 wt.% N), an amount of phosphorus equal to that provided by 5 wt.% to 10 wt.% P₂O₅ (5 wt.% to 10 wt.% P), 2 wt.% to 8 wt.% sulfur (2 wt.% to 8 wt.% S), and 5 wt.% to 11 wt.% calcium (5 wt.% to 11 wt.% Ca). In some preferred instances, the UPCS granule can contain 25 wt.% N, 8.5 wt.% P, 5.5 wt.% S, and 8 wt.% Ca (a NPKSCa: 25-8.5-0-5.5-8) based fertilizer. The fertilizer compositions can be beneficial where higher concentrations of nitrogen are desired.

The UPCS granule of the present invention can be produced by the following non-limiting reaction with Ca₃(PO₄)₂ representing some of the participating phosphorus and calcium present in rock phosphate. The reaction equation below is not a balanced equation, but represents some of the reactants and products:

Ca₃(PO₄)₂ + H₂SO₄ → H₃PO₄ + CaSO₄·2H₂O

addition of CO(NH₂)₂ to products above → CaSO₄·4CO(NH₂)₂ + CO(NH₂)₂·H₃PO₄

The UPCS granule produced can also contain low amounts of moisture. The free-moisture content of the granule can be less than 1 wt.%, preferably less than 0.8 wt.%, less than 0.5 wt.% water or 0.25 wt.% to 0.7 wt.% water. In some instances, the free moisture content is 1, 0.9, 0.8, 0.7, 0.6, 0.5, 0.4, 0.3, 0.2, 0.1, or 0 wt.%.

The granule can be comprised of one or more particles. A first portion of the particles can be the calcium sulfate urea adduct, and a second portion of the particles can be the urea phosphate. In certain non-limiting aspects, the first portion of the particles can have an average particle size of 1, 2, 3, 4, 5, 6, 7, 8, 9, 10, 11, 12, 13, 14, 15, 20, 30, 40, 50, 60, 70, 80, 90, 100, 200, 300, 400, 500, 600, 700, 800, or 900 micrometers or any size there between, and the second portion of the particles can have an average particle size of 1, 2, 3, 4, 5, 6, 7, 8, 9, 10, 11, 12, 13, 14, 15, 20, 30, 40, 50, 60, 70, 80, 90, 100, 200, 300, 400, 500, 600, 700, 800, or 900 micrometers or any size there between. In some embodiments, the particles can be elongated particles or can be substantially spherical particles or other shapes, or combinations of such shapes. Non-limiting examples of shapes include a sphere, a puck, an oval, a rod, an oblong, or a random shape.

The UPCS granules can have a crush strength of 1, 2, 3, 4, 5, 6, 7, 8, 9, 10 kg/granule, or more, or any amount there between, preferably 2 kg/granule to 5 kg/granule.

These and other non-limiting aspects of the present invention are discussed in further detail in the following sections.

### A. Process to Produce UPCS Fertilizer Granules

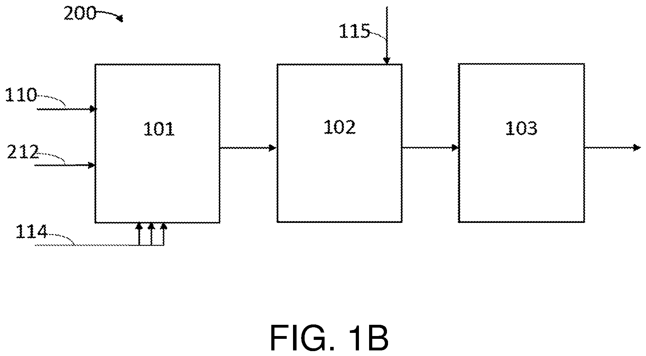

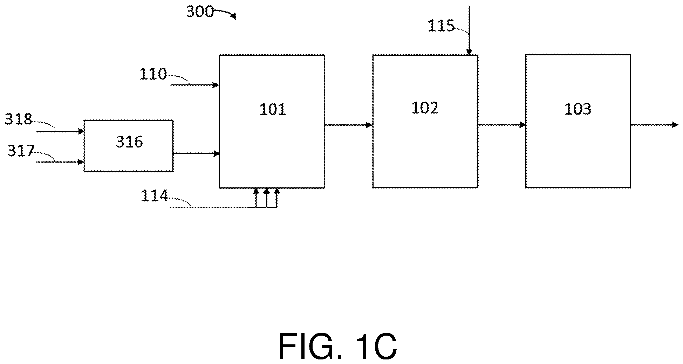

The UPCS granules of the present invention can be made using a granulation system such as, but not limited to, granulation systems 100 (not encompassed by the wording of the claims but considered as useful for understanding the invention), 200, and/or 300 shown in FIG. 1A (not encompassed by the wording of the claims but considered as useful for understanding the invention), FIG. 1B, or FIG. 1C, respectively, or a combination thereof. The granulation systems can be continuous processes or batch processes capable of handling slurries. The granulation systems can include a mixing zone 101. The mixing zone 101 can be in a continuous stirred-tank reactor. In the mixing zone 101, urea 110 (*e*.*g*., fresh urea prills, urea melt, or a urea solution) (FIG. 1A), phosphoric acid 112, gypsum 113, and optionally water 111, and optionally sulfuric acid 317 (not shown in FIG. 1A) can be combined in the mixing zone 101 (*e*.*g*., a continuous stirred-tank reactor) to form an aqueous slurry. In some instances, the water content of the aqueous slurry is 12% to 40% by weight, 12% to 20% by weight, 12 to 16% by weight, or 13% to 15% by weight, or any range therein. A high level of mixing (*e*.*g*., agitator rpm of greater than 200 rpm) can be used to promote formation of the UCS adduct and urea phosphate to decrease the amount of heat required for the formation. In some instances, calcium sulfate in any form of hydration or non-hydration, (*e*.*g*., anhydrous gypsum, calcium sulfate hemihydrate, and calcium sulfate dihydrate) can be used as the gypsum 113. These calcium sulfates with varying degrees on hydration can then be converted to calcium sulfate dihydrate (gypsum) suitable for the UPCS granule formation.

Additionally or alternatively, a phosphoric acid slurry 212 (*see* FIG. 1B) can be used, and can be introduced to the mixing zone 101 with urea 110.

Urea dissolution is an endothermic process. Optionally, the temperature of the mixing zone 101 can be increased to 1) increase the formation of the adduct and/or urea phosphate, 2) decrease the amount of water 111 needed, and/or 3) decrease the viscosity of the aqueous slurry. Heat can be provided by any means suitable or known. In some instances, steam is used. The optional use of steam can inhibit absorption of heat from the surroundings and hence lowering the temperature requirement in the mixing zone 101 without additional energy. With steam injection, the urea can be rapidly dissolved while the surrounding material is maintained at the high temperature, which can preferably be about 60 °C to 100 °C or any range or value therein.

In some instances, no external heating of the mixing zone is needed due to the exothermic reaction of the formation of a phosphoric acid slurry 212 by combining rock phosphate 318 with sulfuric acid 317 in a premixing zone 316 (FIG. 1C) or directly in mixing zone 101 before, during, and/or after addition of urea 110. The sulfuric acid 317 can be combined with the rock phosphate 318 in stoichiometric excess (FIG. 1C). Alternatively, sulfuric acid 317 is added to a phosphoric acid slurry 212 (FIG. 1B) (not shown) or combined with urea 110, phosphoric acid 112, gypsum 113, and optionally water 111 in mixing zone 101 (FIG. 1A) (not shown).

Without wishing to be bound by theory, it is believed that the urea should be in solution (partially or fully solubilized) to exchange urea for water in the gypsum so as to form the UCS adduct. Additional active or inactive ingredients can be added to the aqueous slurry while in the mixing zone 101 or at any other time.

Alternatively, urea can be dissolved in an aqueous solution, gypsum 113 can be formed into a slurry, rock phosphate 318 can be formed into a slurry, phosphoric acid 112 can be combined with gypsum 113, sulfuric acid 317 can be combined with gypsum 113 and/or urea 110 and/or phosphoric acid 112, or any combination thereof can be performed before entry into the mixing zone 101 in a premixing zone 316 or can be premixed in the mixing zone 101 before or during the addition of any one or more of the other ingredients. All or part of the water 111 that enters the mixing zone 101 can enter in a urea 110 solution, gypsum 113 slurry, phosphoric acid 112 and gypsum 113 slurry, phosphoric acid slurry 212, rock phosphate 318 slurry, and/or a sulfuric acid 317 combination with any of the other ingredients.

Also as an alternative, the aqueous slurry containing UCS adduct and urea phosphate produced in the mixing zone 101 can exit the mixing zone 101 and enter a second mixing zone where additional reactants, active ingredients, or inactive ingredients can be added to the aqueous slurry.

Though shown in the figures, optionally, the slurry can exit the mixing zone 101 and enter a stabilizing zone 102 where mixing and/or reacting of the ingredients can be continued and/or UPCS recycle 115 can be added. In some embodiments, UPCS recycle 115 can be added to any one of the zones to help maintain consistency of the mixture. Additional active or inactive ingredients can be added to the slurry.

The conditions of the material exiting the stabilizing zone 102, mixing zone 101, or second mixing zone can be a semi-wet granule, which can easily form "balls when compresses with the hands." If the material is too dry, then granulation is decreased leading to smaller product fraction in the material exiting the dryer 103. If the material is too "wet" (tending towards mud) then there is a risk that the UPCS "mud" will stick to the surfaces of the dryer 103, leading to building up on the dryer 103 surface. In some instances, the material can be formed into granules during or after exiting the stabilizing zone 102 and/or mixing zone 101.

Drying the granule can enable agglomeration to form solid granules and can also create crystal bridges to enable crystallization of the UCS adduct. In some embodiments, the granules are dried or further dried in a dryer 130 or drying zone (FIG. 1A, FIG. 1B, and FIG. 1C). In some instances, the material is sufficiently dried by the exothermic reaction of formation of a phosphoric acid slurry 212 so that the material does not enter or does not need to subsequently enter a dryer 103 or drying zone.

The material can enter a dryer 103 (*e*.*g*., a rotating dryer) to reduce the amount of free water in the material (FIG. 1A (not encompassed by the wording of the claims but considered as useful for understanding the invention), FIG. 1B, and FIG. 1C). The dryer 103 can be a separate zone or container than the mixing zone 101 and/or the stabilizing zone 102. The dryer 103 can be a part of the mixing zone 101 and/or the stabilizing zone 102 and/or the material can be dried in the mixing zone 101 and/or the stabilizing zone 102, or a container containing the mixing zone 101 and/or the stabilizing zone 102. The formation of granules can occur or continue during the drying of the material. The operating temperature of the dryer can also be used to adjust the temperature at which the UPCS recycle materials reenters the granulation system. Continuous operation can be achieved with dryer exit temperatures (as measured by the exit gas) between 80 °C to 90 °C, preferably 85 °C to 88 °C or any value or range therein. In some non-limiting instances, if the exit temperature rises above 90 °C to 95 °C, the composition may melt creating a molten mass inside the dryer 103.

### B. Blended or Compounded Fertilizer Compositions

The UPCS granules of the present invention can also be included in a blended or compounded fertilizer composition comprising other fertilizers, such as other fertilizer granules. Additional fertilizers can be chosen based on the particular needs of certain types of soil, climate, or other growing conditions to maximize the efficacy of the UPCS granules in enhancing plant growth and crop yield. The other fertilizer granules can be granules of urea, single super phosphate (SSP), triple super phosphate (TSP), ammonium sulfate, monoammonium phosphate (MAP), diammonium phosphate (DAP), muriate of potash (MOP), and/or sulfate of potash (SOP), and the like.

### C. Method of Using the UPCS Fertilizer Granules

The UPCS fertilizer granules of the present invention can be used in methods of increasing the amount of nitrogen in soil and of enhancing plant growth. Such methods can include applying to the soil an effective amount of a composition comprising the UPCS fertilizer granule of the present invention. The method may include increasing the growth and yield of crops, trees, ornamentals, *etc.* such as, for example, palm, coconut, rice, wheat, corn, barley, oats, and soybeans. The method can include applying UPCS fertilizer granules of the present invention to at least one of a soil, an organism, a liquid carrier, a liquid solvent, *etc.*

Non-limiting examples of plants that can benefit from the fertilizer of the present invention include vines, trees, shrubs, stalked plants, ferns, *etc.* The plants may include orchard crops, vines, ornamental plants, food crops, timber, and harvested plants. The plants may include Gymnosperms, Angiosperms, and/or Pteridophytes. The Gymnosperms may include plants from the Araucariaceae, Cupressaceae, Pinaceae, Podocarpaceae, Sciadopitaceae, Taxaceae, Cycadaceae, and Ginkgoaceae families. The Angiosperms may include plants from the Aceraceae, Agavaceae, Anacardiaceae, Annonaceae, Apocynaceae, Aquifoliaceae, Araliaceae, Arecaceae, Asphodelaceae, Asteraceae, Berberidaceae, Betulaceae, Bignoniaceae, Bombacaceae, Boraginaceae, Burseraceae, Buxaceae, Canellaceae, Cannabaceae, Capparidaceae, Caprifoliaceae, Caricaceae, Casuarinaceae, Celastraceae, Cercidiphyllaceae, Chrysobalanaceae, Clusiaceae, Combretaceae, Cornaceae, Cyrillaceae, Davidsoniaceae, Ebenaceae, Elaeagnaceae, Ericaceae, Euphorbiaceae, Fabaceae, Fagaceae, Grossulariaceae, Hamamelidaceae, Hippocastanaceae, Illiciaceae, Juglandaceae, Lauraceae, Lecythidaceae, Lythraceae, Magnoliaceae, Malpighiaceae, Malvaceae, Melastomataceae, Meliaceae, Moraceae, Moringaceae, Muntingiaceae, Myoporaceae, Myricaceae, Myrsinaceae, Myrtaceae, Nothofagaceae, Nyctaginaceae, Nyssaceae, Olacaceae, Oleaceae, Oxalidaceae, Pandanaceae, Papaveraceae, Phyllanthaceae, Pittosporaceae, Platanaceae, Poaceae, Polygonaceae, Proteaceae, Punicaceae, Rhamnaceae, Rhizophoraceae, Rosaceae, Rubiaceae, Rutaceae, Salicaceae, Sapindaceae, Sapotaceae, Simaroubaceae, Solanaceae, Staphyleaceae, Sterculiaceae, Strelitziaceae, Styracaceae, Surianaceae, Symplocaceae, Tamaricaceae, Theaceae, Theophrastaceae, Thymelaeaceae, Tiliaceae, Ulmaceae, Verbenaceae, and/or Vitaceae family.

The effectiveness of compositions comprising the UPCS fertilizer granules of the present invention can be ascertained by measuring the amount of nitrogen in the soil at various times after applying the fertilizer composition to the soil. It is understood that different soils have different characteristics, which can affect the stability of the nitrogen in the soil. The effectiveness of a fertilizer composition can also be directly compared to other fertilizer compositions by doing a side-by-side comparison in the same soil under the same conditions.

As discussed above, one of the unique aspects of the UPCS fertilizer granules of the present invention is that they can have a density that is greater than water. This can allow the granules to sink in water rather than float in water. This can be especially beneficial in instances where application is intended to a crop that is at least partially or fully submerged in water. A non-limiting example of such a crop is rice, as the ground in a rice paddy is typically submerged in water. Thus, application of UPCS granules to such crops can be performed such that the granules are homogenously distributed on the ground that is submerged under water. By comparison, granules that have a density that is less than water would have a tendency to remain in or on the water surface, which could result in washing away of the granules and/or coalescence of the granules, either of which would not achieve homogenous distribution of the granules to the ground that is submerged under water.

### D. Compositions

The UPCS granules can be used alone or in combination with other fertilizer actives and micronutrients. The other fertilizer actives and micronutrients can be added with any of the ingredients at the beginning of the granulation process or at any later stage.

Non-limiting examples of additional additives can be micronutrients, primary nutrients, and secondary nutrients. A micronutrient is a botanically acceptable form of an inorganic or organometallic compound such as boron, copper, iron, chloride, manganese, molybdenum, nickel, or zinc. A primary nutrient is a material that can deliver nitrogen, phosphorous, and/or potassium to a plant. Nitrogen-containing primary nutrients may include urea, ammonium nitrate, ammonium sulfate, diammonium phosphate, monoammonium phosphate, urea-formaldehyde, or combinations thereof. A secondary nutrient is a substance that can deliver calcium, magnesium, and/or sulfur to a plant. Secondary nutrients may include lime, gypsum, superphosphate, or a combination thereof. For example, in some instances the UPCS granule can contain calcium sulfate, potassium sulfate, magnesium sulfate or a combination thereof.

In one aspect, the UPCS granules can comprise one or more inhibitors. The inhibitor can be a urease inhibitor or a nitrification inhibitor, or a combination thereof. In one aspect, UPCS granule can comprise a urease inhibitor and a nitrification inhibitor. In one aspect, the inhibitor can be a urease inhibitor. Suitable urease inhibitors include, but are not limited to, N-(n-butyl) thiophosphoric triamide (NBTPT) and phenylphosphorodiamidate (PPDA). In one aspect, the UPCS fertilizer granule can comprise NBTPT or PPDA, or a combination thereof. In another aspect, the inhibitor can be a nitrification inhibitor. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole^{®}, by OHP Inc., USA, 2-amino 4-chloro 6-methyl pyrimidine (AM), 2-mercaptobenzothiazole (MBT), or 2-sulfanilamidothiazole (ST), and any combination thereof. In one aspect, nitrification inhibitor can comprise DMPP, DCD, TU, nitrapyrin, 5-ethoxy-3-trichloromethyl-1,2,4-thiadiazol, AM, MBT or ST, or a combination thereof. In one aspect, the UPCS fertilizer granule can comprise NBTPT, DMPP, TU, DCD, PPDA, nitrapyrin, 5-ethoxy-3-trichloromethyl-1,2,4-thiadiazol , AM, MBT, or ST or a combination thereof.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example 1

### (Processes to Prepare UPCS Fertilizer Granules)

Processes for making a UPCS fertilizer granule of the present invention were performed or can be performed by using the system described in FIG. 1A (not encompassed by the wording of the claims but considered as useful for understanding the invention), FIG. 1B, and FIG. 1C and in Section A of the Detailed Description of the Invention. It was unexpectedly found that when a stoichiometric excess of sulfuric acid (*e*.*g*., 2 mole % to 3 mole % excess of sulfuric acid for the molar amount of phosphorous in the rock phosphate) was used in the reaction, the product contained no gypsum, monocalcium phosphate, dicalcium phosphate, or urea superphosphate. Accordingly, gypsum did not need to be removed from the product before granulation.

0.28 metric tons (MT) of 150-200 mesh size rock phosphate containing phosphorus in an amount equal to that provided by 30 wt. % of P₂O₅ (30 wt. % P) was reacted with 0.24 MT of 98 wt. % sulfuric acid to form a phosphoric acid slurry containing approximately 0.34 MT gypsum and 0.085 MT phosphoric acid (100% P₂O₅ phosphorous equivalents). The sulfuric acid amount used in this reaction was in excess of the stoichiometric amount required to react with all the reactable phosphorous in the rock phosphate. This reaction is an exothermic reaction and the phosphoric acid slurry reached a temperature of approximately 80 °C or hotter. 0.54 MT of prill urea (46 wt. % N) was added to the phosphoric acid slurry to form approximately 0.2 MT urea phosphate and approximately 0.8 MT urea-calcium sulfate (UCS) adduct. Though prill urea was used here, granulated urea or a urea solution can be used in addition to or as an alternative source of urea. The urea phosphate and UCS adduct product was dried and granulated to form approximately 1 MT of UPCS fertilizer granules

A larger scale process for producing UPCS fertilizer granules was performed as follows. 3.3 MT rock phosphate containing 70% bone phosphate of lime (BPL, also known as tricalcium phosphate, Ca₃(PO₄)₂) was combined with 2.8 MT of 98 wt. % sulfuric acid to produce a phosphate slurry containing approximately 1 MT of phosphoric acid (containing 100% P₂O₅ phosphorous equivalents) and 4 MT of gypsum. The sulfuric acid amount used in this reaction was in excess of the stoichiometric amount required to react with all the reactive phosphorous in the rock phosphate. The reaction products were combined at 80 °C with 6.4 MT urea and mixed to form UPCS. The UPCS formed (11.8 MT dry weight of UPCS) was pumped to a granulator. The UPCS can be combined with recycled solid UPCS product during granulation. The granules were then dried, screened for size, and polished.

Both processes produced a product with a fertilizer grade of NPKSCa: 25-8.5-0-5.5-8 without the need to remove gypsum produced as an intermediate in the process.

### Example 2

### (Characterization of the UPCS Fertilizer Granules)

Chemical analysis for nitrogen content was determined by the Total Nitrogen in Fertilizer by Combustion Technique described in AOAC official Method 993.13.1996 (AOAC International). Calcium content was determined by the Calcium by Atomic Absorption Spectrometric Method described in ISO 10084, 1992 (International Organization for Standardization). Sulfur content was determined by the Gravimetric Barium Sulfate Method described in ISO 10084, 1992 (International Organization for Standardization). Phosphorus content was determined by the Quinoline Phosphomolybdate Gravimetric Method described in ISO 6598, 1985 (International Organization for Standardization). The UPCS fertilizer of Example 1 was determined to contain 25 wt.% nitrogen, 8.5 wt.% phosphorous, 5.5 wt.% sulfur, and 8 wt.% calcium.

The purity of the components can be cross-checked by NMR, HPLC, and LCMS analysis.

Granule size can be determined using standard sieve test methods. The granules are expected to be able to be produced in any size required for fertilizer applications, such as spherical granules having a diameter of between 5 mm and 5 cm.

Crush strength can be determined by a commercial compression tester (Chatillon Compression Tester). Individual granules between 2 to 4 mm in diameter can be placed on a mounted flat (stainless steel) surface and pressure applied by a flat-end rod (stainless steel) attached to the compression tester. A gauge mounted in the compression tester can measure the pressure (in kilograms) required to fracture the granule. At least 25 granules can be tested and the average of these measurements can be taken as the crush strength. (Ref. method # IFDC S-115 Manual for determining physical properties of fertilizer-IFDC 1993). It is expected that the formulation will have an acceptable crush strength (>2 kgf/granule).

The stability in soil and/or water, release rates, nitrogen volatilization, and nitrogen transformation (nitrification) can be measured in different soils and/or water and compared to other fertilizers and to products on the market. A soil that is representative of a broader class of soil types can be used to measure the properties of the fertilizer. Greenville soil and Crowley soil are two such representative soils. Other soils may also be used for the experiments described herein.

Nitrogen volatilization can be determined as the percentage of nitrogen loss via ammonia volatilization as compared to the amount of nitrogen applied or as the absolute mass of nitrogen lost via ammonia volatilization.

Benefits to crops can be determined and compared to other fertilizers and to products on the market. Non-limiting properties of the crop that can be tested include growth rate, root mass, head size, fruit size, grain size and mass, number of plants, number of fruits or grains, date to maturity, drought tolerance, heat and cold tolerance, yield, etc.

Surface and cross-sectional morphology of the UPCS fertilizer granule of the present invention can be carried out using a scanning electron microscope (SEM). These morphology studies can be used to determine the properties of a coated or uncoated UPCS fertilizer of the present invention.

### Example 3

### (Compatibility)

The stable UPCS granules of the present invention have increased stability over urea and decreased production costs that make the UPCS granules of the present invention an attractive fertilizer product alone and in blended or compounded fertilizers. It is expected that the UPCS granules will be compatible with a wide range of typical fertilizer raw materials such as DAP, MAP, urea, MOP, and SOP and more compatible than urea. Accordingly, the UPCS granules can be used to provide a range of nitrogen-phosphorus-sulfur (NPS) and nitrogen-phosphorus-potassium-sulfur (NPKS) grades.

## Claims

1. A urea phosphate calcium sulfate (UPCS) fertilizer granule comprising urea phosphate and a urea-calcium sulfate (UCS) adduct, wherein the granule comprises 22 wt.% to 28 wt.% nitrogen (22 wt.% to 28 wt.% N), an amount of phosphorus equal to that provided by 5 wt.% to 10 wt.% P₂O₅ (5 wt.% to 10 wt.% P), 2 wt.% to 8 wt.% sulfur (2 wt.% to 8 wt.% S), and 5 wt.% to 11 wt.% calcium (5 wt.% to 11 wt.% Ca).

2. The UPCS fertilizer granule of claim 1, comprising 23 wt.% to 27 wt.% N, 7 wt.% to 10 wt.% P, 3 wt.% to 7 wt.% S, and 6 wt.% to 10 wt.% Ca, preferably 24 wt.% to 26 wt.% N, 7.5 wt.% to 9.5 wt.% P, 4.5 wt.% to 6.5 wt.% S, and 7 wt.% to 9 wt.% Ca, and more preferably 25 wt.% N, 8.5 wt.% P, 5.5 wt.% S, and 8 wt.% Ca.

3. The UPCS fertilizer granule of claim 1, wherein the granule does not contain monocalcium phosphate, dicalcium phosphate, gypsum, and/or urea superphosphate.

4. The UPCS fertilizer granule of claim 1, wherein the UCS adduct is CaSO₄·4CO(NH₂)₂.

5. A fertilizer comprising the UPCS fertilizer granule of claim 1.

6. The fertilizer of claim 5, wherein the fertilizer is a fertilizer blend or a compounded fertilizer comprising at least one additional component.

7. The fertilizer of claim 6, wherein the at least one additional component is a phosphate-based fertilizer, a urea-based fertilizer, or a potassium-based fertilizer; or wherein the at least one additional component comprises a micronutrient, a secondary nutrient, an organic additive, or any combination thereof.

8. A method of making a urea phosphate calcium sulfate (UPCS) fertilizer granule of claim 1, the method comprising contacting urea with a composition comprising phosphoric acid and gypsum when the composition has a temperature of at least 65 °C to produce a product comprising a urea-calcium sulfate (UCS) adduct and a urea phosphate, and removing at least a portion of water from the product to form the UPCS fertilizer granule, wherein the UPCS fertilizer granule formed does not contain monocalcium phosphate, dicalcium phosphate, gypsum, and/or urea superphosphate, and wherein the composition comprising phosphoric acid and gypsum is a phosphoric acid slurry which is obtained by contacting rock phosphate with sulfuric acid in excess of the stoichiometric amount of sulfuric acid required to form phosphoric acid and gypsum.

9. The method of claim 8, wherein the urea is contacted with the composition comprising phosphoric acid and gypsum when the composition has a temperature of 65 °C to 95 °C.

10. The method of claim 8, further comprising combining phosphoric acid with rock phosphate and sulfuric acid to form the composition comprising phosphoric acid and gypsum.

11. The method of claim 8, wherein the composition comprising phosphoric acid and gypsum is a phosphoric acid slurry obtained by contacting rock phosphate with sulfuric acid having a concentration of at least 90 wt.% sulfuric acid, the sulfuric acid being present in excess of the stoichiometric amount required to form phosphoric acid and gypsum.

12. The method of claim 8, wherein gypsum is not filtered or removed at or between the step of contacting urea with a composition comprising phosphoric acid and gypsum and the step of removing at least a portion of water from the product to form the UPCS fertilizer granule.

13. A method of fertilizing, the method comprising applying a UPCS fertilizer granule of claim 1 to a portion of a soil, a crop, or the soil and the crop.

## Patentansprüche

1. Harnstoffphosphat-Calciumsulfat(UPCS)-Düngergranulat enthaltend Harnstoffphosphat und ein Harnstoff-Calciumsulfat(UCS)-Addukt, wobei das Granulat 22 Gew.-% bis 28 Gew.-% Stickstoff (22 Gew.-% bis 28 Gew.-% N), eine Menge an Phosphor wie von 5 Gew.-% bis 10 Gew.-% P₂O₅ bereitgestellt (5 Gew.-% bis 10 Gew.-% P), 2 Gew.-% bis 8 Gew.-% Schwefel (2 Gew.-% bis 8 Gew.-% S) und 5 Gew.-% bis 11 Gew.-% Calcium (5 Gew.-% bis 11 Gew.-% Ca).

2. UPCS-Düngergranulat nach Anspruch 1 enthaltend 23 Gew.-% bis 27 Gew.-% N, 7 Gew.-% bis 10 Gew.-% P, 3 Gew.-% bis 7 Gew.-% S und 6 Gew.-% bis 10 Gew.-% Ca, vorzugsweise 24 Gew.-% bis 26 Gew.-% N, 7,5 Gew.-% bis 9,5 Gew.-% P, 4,5 Gew.-% bis 6,5 Gew.-% S und 7 Gew.-% bis 9 Gew.-% Ca und stärker bevorzugt 25 Gew.-% N, 8,5 Gew.-% P, 5,5 Gew.-% S und 8 Gew.-% Ca.

3. UPCS-Düngergranulat nach Anspruch 1, wobei das Granulat kein Monocalciumphosphat, kein Dicalciumphosphat, keinen Gips und/oder kein Harnstoffsuperphosphat enthält.

4. UPCS-Düngergranulat nach Anspruch 1, wobei es das UCS-Addukt um CaSO₄⁺4CO(NH₂)₂ ist.

5. Dünger enthaltend das UPCS-Düngergranulat nach Anspruch 1 .

6. Dünger nach Anspruch 5, wobei der Dünger eine Düngermischung oder ein Mehrnährstoffdünger ist, der mindestens eine zusätzliche Komponente enthält.

7. Dünger nach Anspruch 6, wobei die mindestens eine zusätzliche Komponente ein Dünger auf Phosphatbasis, ein Dünger auf Harnstoffbasis oder ein Dünger auf Kaliumbasis ist; oder wobei die mindestens eine zusätzliche Komponente einen Mikronährstoff, einen sekundären Nährstoff, einen organischer Zusatz oder irgendeine Kombination davon umfasst.

8. Verfahren zum Herstellen eines Harnstoffphosphat-Calciumsulfat(UPCS)-Düngergranulats nach Anspruch 1, wobei das Verfahren umfasst: In-Kontakt-Bringen von Harnstoff mit einer Zusammensetzung, die Phosphorsäure und Gips enthält, wenn die Zusammensetzung eine Temperatur von mindestens 65 °C aufweist, um ein Produkt zu produzieren, das ein Harnstoff-Calciumsulfat(UCS)-Addukt und ein Harnstoffphosphat enthält, und Entfernen von zumindest einem Teil von Wasser aus dem Produkt, um das UPCS-Düngergranulat zu bilden, wobei das gebildete UPCS-Düngergranulat kein Monocalciumphosphat, kein Dicalciumphosphat, keinen Gips und/oder kein Harnstoffsuperphosphat enthält, und wobei die Zusammensetzung, die Phosphorsäure und Gips enthält, ein Phosphorsäureschlamm ist, die erhalten wird durch In-Kontakt-Bringen von Rohphosphat mit einer Menge an Schwefelsäure, die größer ist als die stöchiometrische Menge an Schwefelsäure, die nötig ist, um Phosphorsäure und Gips zu bilden.

9. Verfahren nach Anspruch 8, wobei der Harnstoff mit der Zusammensetzung, die Phosphorsäure und Gips enthält, in Kontakt gebracht wird, wenn die Zusammensetzung eine Temperatur von 65 °C bis 95 °C aufweist.

10. Verfahren nach Anspruch 8, ferner umfassend ein Kombinieren von Phosphorsäure mit Rohphosphat und Schwefelsäure , um die Zusammensetzung zu bilden, die Phosphorsäure und Gips enthält.

11. Verfahren nach Anspruch 8, wobei die Zusammensetzung, die Phosphorsäure und Gips enthält, eine Phosphorsäureschlämme ist, die erhalten wird durch In-Kontakt-Bringen von Rohphosphat mit Schwefelsäure, die eine Konzentration von mindestens 90 Gew.-% Schwefelsäure aufweist, wobei die Schwefelsäure in einer Menge vorhanden ist, die größer ist als die stöchiometrische Menge, die nötig ist, um Phosphorsäure und Gips zu bilden.

12. Verfahren nach Anspruch 8, wobei bei oder zwischen dem Schritt des In-Kontakt-Bringens von Harnstoff mit einer Zusammensetzung, die Phosphorsäure und Gips enthält, und dem Schritt des Entfernens von zumindest einem Teil von Wasser aus dem Produkt, um das UPCS-Düngergranulat zu bilden, kein Gips herausgefiltert oder entfernt wird.

13. Düngeverfahren, wobei das Verfahren ein Aufbringen eines UPCS-Düngergranulats nach Anspruch 1 auf einen Teil von einem Boden, einer Feldfrucht oder von dem Boden und der Feldfrucht umfasst.

## Revendications

1. Granulé d'engrais urée phosphate sulfate de calcium (UPCS) comprenant du phosphate d'urée et un adduit d'urée-sulfate de calcium (UCS), dans lequel le granulé comprend de 22 % en poids à 28 % en poids d'azote (22 % en poids à 28 % en poids de N), une quantité de phosphore égale à celle fournie par 5 % en poids à 10 % en poids de P₂O₅ (5 % en poids à 10 % en poids de P), de 2 % en poids à 8 % en poids de soufre (2 % en poids à 8 % en poids de S), et de 5 % en poids à 11 % en poids de calcium (5 % en poids à 11 % en poids de Ca).

2. Granulé d'engrais UPCS selon la revendication 1, comprenant de 23 % en poids à 27 % en poids de N, de 7 % en poids à 10 % en poids de P, de 3 % en poids à 7 % en poids de S, et de 6 % en poids à 10 % en poids de Ca, de préférence de 24 % en poids à 26 % en poids de N, de 7,5 % en poids à 9,5 % en poids de P, de 4,5 % en poids à 6,5 % en poids de S, et de 7 % en poids à 9 % en poids de Ca, et plus préférentiellement 25 % en poids de N, 8,5 % en poids de P, 5,5 % en poids de S, et 8 % en poids de Ca.

3. Granulé d'engrais UPCS selon la revendication 1, dans lequel le granulé ne contient pas de phosphate monocalcique, de phosphate bicalcique, de gypse et/ou de superphosphate d'urée.

4. Granulé d'engrais UPCS selon la revendication 1, dans lequel l'adduit UCS est du CaSO₄ · 4CO(NH₂)₂.

5. Engrais comprenant le granulé d'engrais UPCS selon la revendication 1.

6. Engrais selon la revendication 5, dans lequel l'engrais est un mélange d'engrais ou un engrais composé comprenant au moins un composant supplémentaire.

7. Engrais selon la revendication 6, dans lequel ledit au moins un composant supplémentaire est un engrais à base de phosphate, un engrais à base d'urée ou un engrais à base de potassium ; ou dans lequel ledit au moins un composant supplémentaire comprend un micronutriment, un nutriment secondaire, un additif organique ou toute combinaison de ceux-ci.

8. Procédé de fabrication d'un granulé d'engrais urée phosphate sulfate de calcium (UPCS) selon la revendication 1, le procédé comprenant la mise en contact d'urée avec une composition comprenant de l'acide phosphorique et du gypse lorsque la composition a une température d'au moins 65 °C pour produire un produit comprenant un adduit d'urée-sulfate de calcium (UCS) et un phosphate d'urée, et l'élimination d'au moins une partie de l'eau du produit pour former le granulé d'engrais UPCS, le granulé d'engrais UPCS formé ne contenant pas de phosphate monocalcique, de phosphate dicalcique, de gypse et/ou de superphosphate d'urée, et la composition qui comprend de l'acide phosphorique et du gypse étant une boue d'acide phosphorique obtenue en mettant en contact de la roche phosphatée avec de l'acide sulfurique en excès par rapport à la quantité stoechiométrique d'acide sulfurique nécessaire pour former de l'acide phosphorique et du gypse.

9. Procédé selon la revendication 8, dans lequel l'urée est mise en contact avec la composition comprenant de l'acide phosphorique et du gypse lorsque la composition a une température comprise entre 65 °C et 95 °C.

10. Procédé selon la revendication 8, comprenant en outre le fait de combiner l'acide phosphorique avec la roche phosphatée et l'acide sulfurique pour former la composition comprenant de l'acide phosphorique et du gypse.

11. Procédé selon la revendication 8, dans lequel la composition comprenant de l'acide phosphorique et du gypse est une boue d'acide phosphorique obtenue en mettant en contact une roche phosphatée avec de l'acide sulfurique ayant une concentration d'au moins 90 % en poids d'acide sulfurique, l'acide sulfurique étant présent en excès par rapport à la quantité stoechiométrique requise pour former de l'acide phosphorique et du gypse.

12. Procédé selon la revendication 8, dans lequel le gypse n'est pas filtré ou éliminé lors de l'étape de mise en contact de l'urée avec une composition comprenant de l'acide phosphorique et du gypse, ou entre cette étape et l'étape d'élimination d'au moins une partie de l'eau du produit pour former le granulé d'engrais UPCS.

13. Procédé de fertilisation comprenant l'application d'un granulé d'engrais UPCS selon la revendication 1 à une partie d'un sol, d'une culture ou du sol et de la culture.
